# EUROPÄISCHE PATENTSCHRIFT

(11) **EP 3 803 142 B1**
(45) Veröffentlichungstag und Bekanntmachung des Hinweises auf die Patenterteilung: **28.09.2022**
(21) Anmeldenummer: 19725092.1
(22) Anmeldetag: 15.05.2019
(51) Int. Cl.: F16C 17/04, F16C 33/04, F16C 17/02

(54) **FOLIENLAGER**
FOIL BEARING
PALIER A LAMES

(30) Priorität: 29.05.2018 DE 102018208511
(43) Veröffentlichungstag der Anmeldung: 14.04.2021
(73) Patentinhaber: Robert Bosch GmbH, 70442 Stuttgart (DE)
(72) Erfinder: WESSNER, Jochen, 73728 Esslingen (DE); KATZ, Martin, 70469 Stuttgart (DE); WIEDMANN, Felix, 70469 Stuttgart (DE)
(86) Internationale Anmeldenummer: PCT/EP2019/062445
(87) Internationale Veröffentlichungsnummer: WO 2019/228803

(56) Entgegenhaltungen:
- KR-A- 20130 019 218
- US-A1- 2008 267 543
- US-A1- 2016 333 927

## Beschreibung

Die Erfindung betrifft ein Folienlager mit mindestens einer Folie, die innerhalb einer Lagerhülse angeordnet ist. Die Erfindung betrifft des Weiteren ein Verfahren zum Herstellen einer Lagerhülse für ein Folienlager.

### Stand der Technik

Durch das Dokument US 2008/267543 A1 ist ein Folienlager mit mehreren Folien bekannt, die innerhalb einer Lagerhülse angeordnet sind. Die Lagerhülse umfasst dabei drei getrennte und wieder zusammengefügte Teilkörper, wobei die Art der Verbindung der Teilkörper nicht näher angegeben ist.

Durch das Dokument KR 2013 0019218 A ist ein Folienlager mit mindestens einer Folie bekannt, die innerhalb einer Lagerhülse angeordnet ist. Die Lagerhülse umfasst zwei getrennte und wieder zusammengefügte Teilkörper. Die Verbindung der beiden Teilkörper erfolgt dabei durch mehrere Schraubverbindungen. Dies erfordert einen großen Herstellungsaufwand.

### Offenbarung der Erfindung

Aufgabe der Erfindung ist es, die Herstellung, insbesondere Montage, eines Folienlagers mit mindestens einer Folie, die innerhalb einer Lagerhülse angeordnet ist, zu vereinfachen.

Die Aufgabe ist bei einem Folienlager mit mindestens einer Folie, die innerhalb einer Lagerhülse angeordnet ist, wobei die Lagerhülse zwei getrennte und wieder zusammengefügte Teilkörper umfasst, dadurch gelöst, dass die Lagerhülse zwei in axialer Richtung durchgehende Trennlinien umfasst, an denen die zwei Teilkörper stoffschlüssig mieinander verbunden sind. Das Folienlager ist als Radiallager ausgeführt und wird auch als aerodynamisches Gleitlager bezeichnet. Zur Schmierung des aerodynamischen Gleitlagers wird ein gasförmiges Fluid, insbesondere Luft, verwendet. Daher wird das Folienlager oder aerodynamische Gleitlager auch als Luftlager bezeichnet. Die Lagerhülse des Folienlagers hat im Wesentlichen die Gestalt eines geraden, hohlen Kreiszylinders oder Ringkörpers. Daher kann die Lagerhülse auch als Lagerring bezeichnet werden. Die Lagerhülse des Folienlagers wird zunächst in einem Stück, zum Beispiel durch Gießen, hergestellt. Anschließend wird die einstückige Lagerhülse bei der Herstellung bewusst zerstört, zum Beispiel durch Cracken oder Bruchtrennen. Das liefert unter anderem den Vorteil, dass die beiden getrennten Teilkörper einfacher bearbeitet werden können, insbesondere einfacher spanend bearbeitet werden können. Die bearbeiteten Teilkörper können dann wieder stoffschlüssig zusammengefügt werden.

Die Trennlinien sind vorteilhaft als Bruchlinien ausgeführt, die ein definiertes Zusammensetzen der beiden Teilkörper vor dem Verbinden vereinfachen. Die korrekt relativ zueinander positionierten Teilkörper können dann auf einfache Art und Weise stoffschlüssig, insbesondere durch Schweißen, fest miteinander verbunden werden. Danach kann die aus mindestens zwei Teilkörpern bestehende Lagerhülse genauso wie eine einstückige Lagerhülse verwendet werden.

Ein weiteres bevorzugtes Ausführungsbeispiel des Folienlagers ist dadurch gekennzeichnet, dass die Lagerhülse an den Enden der Trennlinien jeweils eine Kerbe aufweist. Die Kerben stellen auf einfache Art und Weise sicher, dass die Trennlinien beim Bruchtrennen der Lagerhülse einen gewünschten Verlauf nehmen.

Ein weiteres bevorzugtes Ausführungsbeispiel des Folienlagers ist dadurch gekennzeichnet, dass mindestens einer der Teilkörper eine Geometrie zur Fixierung der Folie aufweist. Die Geometrie zur Fixierung der Folie ist zum Beispiel als Vertiefung, insbesondere als Axialnut ausgeführt. Die Geometrie zur Fixierung der Folie kann auf einfache Art und Weise, insbesondere spanend, in dem Teilkörper erzeugt werden.

Ein weiteres bevorzugtes Ausführungsbeispiel des Folienlagers ist dadurch gekennzeichnet, dass eine Trennlinie im Bereich der Geometrie zur Fixierung der Folie in der Lagerhülse angeordnet ist. Dadurch kann die Bearbeitung, insbesondere die spanende Bearbeitung des Teilkörpers der Lagerhülse, beim Erzeugen der Geometrie zur Fixierung der Folie weiter vereinfacht werden.

Ein weiteres bevorzugtes Ausführungsbeispiel des Folienlagers ist dadurch gekennzeichnet, dass die beiden Teilkörper etwa gleich groß sind. Die beiden Teilkörper stellen im Wesentlichen zwei Hälften der Lagerhülse dar. Die beiden Lagerhülsenhälften sind zur Bearbeitung, insbesondere zur spanenden Bearbeitung, viel einfacher handhabbar als eine komplette Lagerhülse.

Bei einem Verfahren zum Herstellen einer Lagerhülse für ein Folienlager, insbesondere für ein vorab beschriebenes Folienlager, ist die oben angegebene Aufgabe alternativ oder zusätzlich dadurch gelöst, dass eine einteilige Lagerhülse an Trennlinien in zwei Teilkörper getrennt wird, von denen mindestens einer bearbeitet wird, bevor die bearbeiteten Teilkörper wieder zusammengefügt werden. Die Teilkörper können viel einfacher bearbeitet, insbesondere spanend bearbeitet, werden als die einteilige Lagerhülse.

Ein bevorzugtes Ausführungsbeispiel des Verfahrens ist dadurch gekennzeichnet, dass eine Bruchkraft in axialer Richtung auf die einteilige Lagerhülse aufgebracht wird, um die Lagerhülse in die zwei Teilkörper zu trennen. Durch Aufbringen der Bruchkraft wird die Lagerhülse entlang zweier in axialer Richtung durchgehenden Trennlinien getrennt.

Ein weiteres bevorzugtes Ausführungsbeispiel des Verfahrens ist dadurch gekennzeichnet, dass mindestens einer der Teilkörper spanend bearbeitet wird. Bei der spanenden Bearbeitung wird vorteilhaft eine Geometrie zur Fixierung der Folie in die Lagerhülse eingebracht. Alternativ oder zusätzlich kann durch entsprechende Bearbeitung der beiden Teilkörper eine unrunde Kontur der Innenfläche der Lagerhülse, insbesondere durch Zerspanen, erzeugt werden.

Ein weiteres bevorzugtes Ausführungsbeispiel des Verfahrens ist dadurch gekennzeichnet, dass die beiden bearbeiteten Teilkörper an den Trennlinien zusammengefügt und verschweißt werden. Dadurch wird auf einfache Art und Weise eine Lagerhülse mit einer komplexen Geometrie im Inneren geschaffen.

Die Geometrie zur Fixierung der Folie in der Lagerhülse umfasst vorteilhaft eine Axialnut, in die zwei Umfangsendabschnitte der Folie eingreifen. Durch die Axialnut wird die Folie vorteilhaft in radialer Richtung in der Axialhülse fixiert.

Ein bevorzugtes Ausführungsbeispiel des Folienlagers ist dadurch gekennzeichnet, dass die Axialnut einander in Umfangsrichtung gegenüberliegende Nutflanken aufweist, an der sich die zwei Umfangsendabschnitte der Folie abstützen. Dadurch wird auf einfache Art und Weise eine stabile Abstützung der Folie in der Lagerhülse ermöglicht. Darüber hinaus wird die Montage der Folie in die Lagerhülse vereinfacht.

Ein weiteres bevorzugtes Ausführungsbeispiel des Folienlagers ist dadurch gekennzeichnet, dass die Axialnut einen trapezförmigen Nutquerschnitt aufweist, der sich radial nach innen erweitert. Die Schrägstellung der gegenüberliegenden Nutflanken der Axialnut ist vorteilhaft so gewählt, dass die Umfangsendabschnitte der Folie im montierten Zustand nicht aus der Axialnut herausrutschen.

Ein weiteres bevorzugtes Ausführungsbeispiel des Folienlagers ist dadurch gekennzeichnet, dass die Umfangsendabschnitte der Folie formschlüssig miteinander verbunden sind. Der Formschluss ist vorteilhaft so ausgeführt, dass die Umfangsendabschnitte der Folie im eingebauten Zustand in axialer Richtung relativ zueinander fixiert werden. Der Begriff axial bezieht sich auf eine Drehachse des Folienlagers. Axial bedeutet in Richtung oder parallel zur Drehachse des Folienlagers. Analog bedeutet radial quer zur Drehachse des Folienlagers.

Ein weiteres bevorzugtes Ausführungsbeispiel des Folienlagers ist dadurch gekennzeichnet, dass einer der Umfangsendabschnitte eine Stecklasche aufweist, die in eine Steckausnehmung an dem anderen Umfangsendabschnitt eingreift. Dadurch wird zum einen die axiale Fixierung der Umfangsendabschnitte in der Axialnut ermöglicht. Darüber hinaus wird die Montage der Folie mit den zusammengesteckten Umfangsendabschnitten erheblich vereinfacht.

Ein weiteres bevorzugtes Ausführungsbeispiel des Folienlagers ist dadurch gekennzeichnet, dass die Stecklasche und die Steckausnehmung die Gestalt eines Rechtecks aufweisen. Die Stecklasche und die Steckausnehmung können auf einfache Art und Weise, zum Beispiel durch Stanzen, in der Folie erzeugt werden.

Ein weiteres bevorzugtes Ausführungsbeispiel des Folienlagers ist dadurch gekennzeichnet, dass die Stecklasche und die Steckausnehmung die Gestalt eines Trapezes aufweisen. Die Gestalt der Trapeze ist vorteilhaft gegensinnig ausgerichtet. Das bedeutet, dass eine zum Ende hin kürzer werdende Stecklasche mit einer zum Ende hin kürzer werdenden Steckausnehmung kombiniert ist, und umgekehrt.

Ein weiteres bevorzugtes Ausführungsbeispiel des Folienlagers ist dadurch gekennzeichnet, dass das Folienlager eine Oberfolie und eine Unterfolie umfasst, die zwischen der Oberfolie und der Lagerhülse angeordnet ist. Die Oberfolie wird auch als Top-Foil bezeichnet. Innerhalb der Oberfolie ist eine mit dem Folienlager zu lagernde Welle angeordnet. Die Unterfolie wird auch als Beamoder Bump-Folie bezeichnet. Die Unterfolie ist vorteilhaft mit einer Federvorrichtung kombiniert. Die Federvorrichtung ist vorteilhaft in die Unterfolie integriert, zum Beispiel in Form einer Vielzahl von Federlaschen.

Die Erfindung betrifft des Weiteren eine Folie für ein vorab beschriebenes Folienlager. Die Folie ist separat handelbar.

Bei einem Verfahren zum Montieren mindestens einer Folie in einem vorab beschriebenen Folienlager ist die oben angegebene Aufgabe alternativ oder zusätzlich dadurch gelöst, dass die Folie mit einer Montagehilfsvorrichtung, die einen Außendurchmesser hat, der kleiner als ein Innendurchmesser der Lagerhülse ist, gehalten, in die Lagerhülse eingeführt und in axialer Richtung positioniert wird, bevor die Montagehilfsvorrichtung aus der Lagerhülse mit der positionierten Folie entfernt wird. Dadurch wird die Montage der Folie, insbesondere von zwei Folien, in dem Folienlager erheblich vereinfacht.

Die Erfindung betrifft gegebenenfalls auch eine Montagehilfsvorrichtung zum Montieren mindestens einer Folie in einem vorab beschriebenen Folienlager gemäß einem vorab beschriebenen Verfahren. Die Montagehilfsvorrichtung ist separat handelbar.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnung

Es zeigen:
Figur 1 eine perspektivische Darstellung einer Lagerhülse eines Folienlagers mit zwei Folien, die innerhalb der Lagerhülse angeordnet sind;
Figur 2 das Folienlager aus Figur 1 in der Vorderansicht, wobei die beiden Folien nur mit ihren einander zugewandten Umfangsendabschnitten dargestellt sind, die in eine Axialnut der Lagerhülse eingreifen;
Figur 3 eine der Folien des Folienlagers aus den Figuren 1 und 2 in der Draufsicht;
Figur 4 eine vereinfachte Darstellung des Folienlagers aus den Figuren 1 und 2 beim Montieren der beiden Folien mit Hilfe einer Montagehilfsvorrichtung;
Figur 5 eine ähnliche Darstellung wie in Figur 1, wobei eine Lagerhülse des Folienlagers zwei getrennte und wieder zusammengefügte Teilkörper umfasst; und
Figur 6 das Folienlager aus Figur 5 in einer Vorderansicht, wobei nur die beiden einander zugewandten Umfangsendabschnitte der Folien dargestellt sind.

### Beschreibung der Ausführungsbeispiele

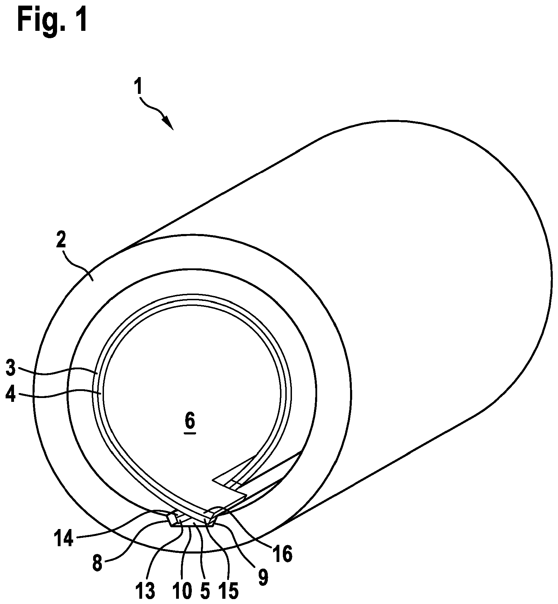

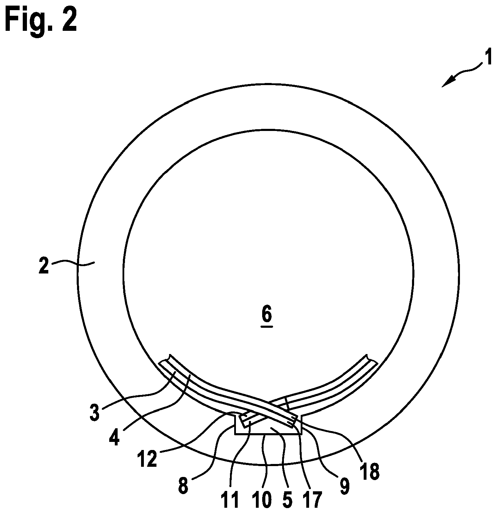

In den Figuren 1 und 2 ist ein Folienlager 1 mit einer Lagerhülse 2 in verschiedenen Ansichten dargestellt. Die Lagerhülse 2 wird auch als Lagerring bezeichnet und hat im Wesentlichen die Gestalt eines geraden, hohlen Kreiszylinders. Im Inneren der Lagerhülse 2 sind zwei Folien 3, 4 des Folienlagers 1 angeordnet.

Die Folie 3 wird auch als Beam, Bump oder Unterfolie bezeichnet und ist zwischen der Lagerhülse 2 und der Folie 4 angeordnet, die auch als Topfolie oder Oberfolie bezeichnet wird. Die Lagerhülse 2 weist radial innen und in den Figuren 1 und 2 unten eine Axialnut 5 auf, die eine Geometrie zur Fixierung der Folien 3, 4 in der Lagerhülse 2 darstellt.

Die Oberfolie 4 begrenzt in der Lagerhülse 2 des Folienlagers 1 einen Innenraum 6, der zur drehbaren Lagerung einer (in den Figuren 1 und 2 nicht dargestellten) Welle dient. Die Welle gehört zum Beispiel zu einem (ebenfalls nicht dargestellten) Rotor einer Strömungsmaschine.

Die Strömungsmaschine ist zum Beispiel Teil einer Luftversorgungseinheit in einem Brennstoffzellensystem. In dem Brennstoffzellensystem ist die Strömungsmaschine zum Beispiel als Verdichter ausgeführt. Der Verdichter umfasst ein Verdichterrad, das vorteilhafter Bestandteil des Rotors ist.

Die Axialnut 5 hat einen trapezförmigen Querschnitt mit einer Basis 10, von der zwei Nutflanken 8, 9 ausgehen. Eine Nutweite oder Nutbreite der Axialnut 5 erweitert sich aufgrund des trapezförmigen Querschnitts der Axialnut 5 radial nach innen. Anders als dargestellt, kann die Axialnut 5 auch einen rechteckigen Querschnitt oder einen trapezförmigen Querschnitt aufweisen, der sich radial nach innen verengt.

Die Unterfolie 3 weist zwei einander zugewandte Umfangsendabschnitte 11, 17 auf. Die Oberfolie 4 weist zwei einander zugewandte Umfangsendabschnitte 12, 18 auf. Die Umfangsendabschnitte 11 und 12 der Folien 3, 4 sind als Stecklaschen 13, 14 ausgeführt und an der Nutflanke 8 der Axialnut 5 abgestützt. Die Umfangsendabschnitte 17, 18 der Folien 3, 4 sind als Steckausnehmungen 15, 16 ausgeführt und an der Nutflanke 9 der Axialnut 5 abgestützt.

Durch die Axialnut 5 werden die beiden Folien 3, 4 in radialer Richtung fixiert. Die Axialnut 5 ist relativ einfach und kostengünstig, zum Beispiel durch einen Räumprozess, herstellbar.

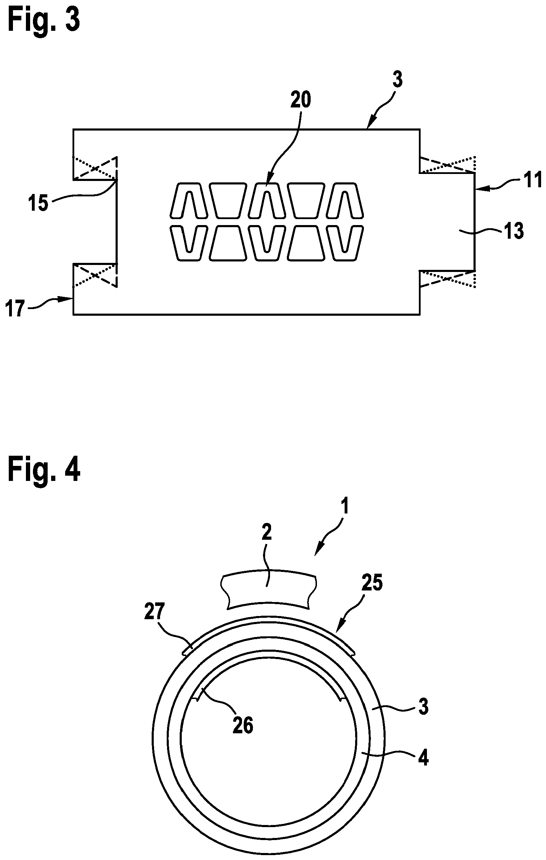

In Figur 3 ist eine der beiden Folien 3, 4, hier die Unterfolie 3, in der Draufsicht dargestellt. Die Unterfolie 3 ist mit einer Federeinrichtung 20 ausgestattet. Die Federeinrichtung 20 umfasst zum Beispiel eine Vielzahl von Federlaschen, die von der Unterfolie 3 abstehen und zum Erzeugen einer Federvorspannkraft in dem Folienlager 1 dienen. Der Aufbau und die Funktion der Federeinrichtung 20 ist an sich bekannt.

In Figur 3 sieht man die Stecklasche 13 an dem Umfangsendabschnitt 11 und die Steckausnehmung 15 an dem Umfangsendabschnitt 17 in der Draufsicht. Die Stecklasche 14 und die Steckausnehmung 16 der Oberfolie 4 sind vorteilhaft genauso wie die Stecklasche 13 und die Steckausnehmung 15 der Unterfolie 3 ausgeführt.

Die Stecklasche 13 und die Steckausnehmung 15 können die Gestalt von Rechtecken aufweisen.

In Figur 3 ist durch gestrichelte Linien und durch punktierte Linien angedeutet, dass die Stecklasche 13 und die Steckausnehmung 15 auch trapezförmig gestaltet sein können. Durch die gestrichelten Linien ist angedeutet, dass die Stecklasche 13 und die Steckausnehmung 15 zum Ende hin enger wird. Durch punktierte Linien ist in Figur 3 angedeutet, dass die Stecklasche 13 und die Steckausnehmung 15 auch zum Ende hin weiter werden können.

In Figur 4 ist vereinfacht dargestellt, wie die beiden Folien 3, 4, die vorteilhaft an ihren Umfangsendabschnitten zusammengesteckt sind, mit Hilfe einer Montagehilfsvorrichtung 25 in der Lagerhülse 2 montiert werden können. Die Montagehilfsvorrichtung 25 umfasst einen inneren Haltekörper 26 und einen äußeren Haltekörper 27.

Der innere Haltekörper 26 hat zum Beispiel die Gestalt eines geraden Kreiszylinders oder eines geraden Kreiszylindermantels. Der äußere Haltekörper 27 hat vorteilhaft die Gestalt eines geraden Kreiszylindermantels mit einem axial verlaufenden Schlitz.

Der axial verlaufende Schlitz an dem äußeren Haltekörper 27 der Montagehilfsvorrichtung 25 hat in Umfangsrichtung vorteilhaft eine etwas größere Abmessung als die Axialnut 5. Die beiden Haltekörper 26, 27 der Montagehilfsvorrichtung 25 sind, zum Beispiel durch radiale Stege an einem Ende der Montagehilfsvorrichtung 25 miteinander verbunden.

Der Außendurchmesser des äußeren Haltekörpers 27 ist kleiner als der Innendurchmesser der Lagerhülse 2, so dass sich die Montagehilfsvorrichtung 25 mit den darin angeordneten und zusammengesteckten Folien 3, 4 leicht in die Lagerhülse 2 einführen lässt. Wenn die korrekte axiale Position erreicht ist, wird die Montagehilfsvorrichtung 25 durch Herausziehen entfernt. Die Umfangsendabschnitte 11, 12 und 17, 18 der Folien 3, 4 werden durch den Schlitz in der Montagehilfsvorrichtung 25 in der Axialnut 5 angeordnet, wie es in Figur 2 gezeigt ist.

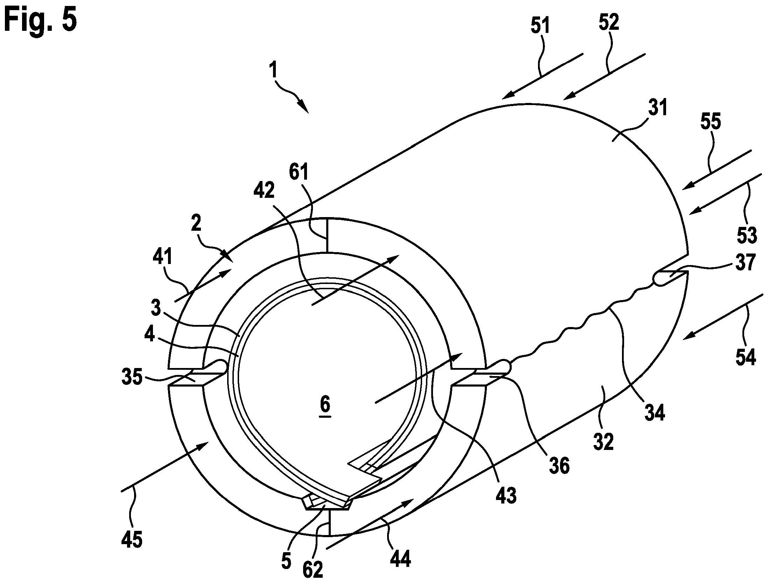

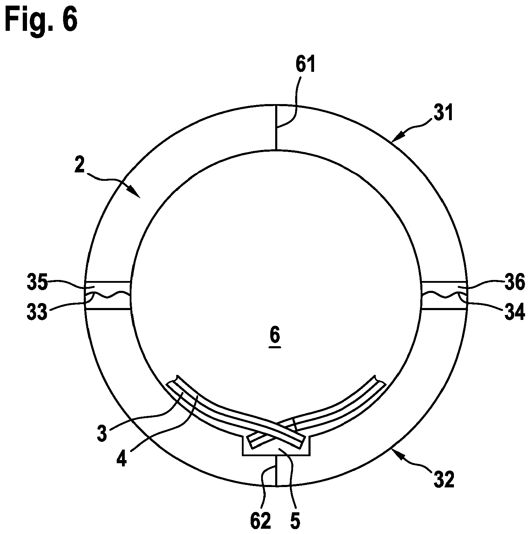

In den Figuren 5 und 6 ist gezeigt, dass das Folienlager 1 eine Lagerhülse 2 umfasst, die zwei getrennte und wieder zusammengefügte Teilkörper 31, 32 umfasst. Die zweiteilige Lagerhülse 2 kann zum Beispiel durch Cracken oder Bruchtrennen hergestellt werden.

In den Figuren 5 und 6 sind zwei Trennlinien 33, 34 angedeutet, entlang derer die Lagerhülse 2 beim Cracken oder Bruchtrennen getrennt wird. Beim Cracken oder Bruchtrennen werden in axialer Richtung Bruchkräfte auf die Lagerhülse 2 aufgebracht, die in Figur 5 durch Pfeile 41 bis 45 und 51 bis 55 angedeutet sind. Zur Vereinfachung des Crackens oder Bruchtrennens sind vorteilhaft gezielt Kerben 35, 36, 37 in die Lagerhülse 2 eingebracht. Die Kerben 35 bis 37 können, wie durch Striche 61, 62 in den Figuren 5 und 6 angedeutet ist, vorteilhaft im Bereich der Geometrie 5 oder Axialnut 5 zur Fixierung der Folien 3, 4 positioniert sein. Das liefert den Vorteil, dass die Axialnut 5 zur Darstellung der Geometrie zur Fixierung der Folien 3, 4 noch einfacher gefertigt werden kann, da unterschiedlichste Werkzeuge zur spanenden Bearbeitung zum Einsatz kommen können.

Beim Aufbringen der Bruchkraft 41 bis 45 und 51 bis 55 teilt sich die Lagerhülse 2 entlang der Bruchlinien 33, 34 in die zwei Teilkörper 31, 32. Dann kann die Axialnut 5 zur Fixierung der Folien 3, 4 in den Teilkörper 32 eingebracht werden. Dies kann einfach und kostengünstig durch einen Zerspanungsprozess erfolgen, da durch die Teilung der Lagerhülse 2 in die beiden Teilkörper 31, 32 die Flächen für die Zerspanung zur Darstellung der Axialnut 5 gut zugänglich sind.

## Patentansprüche

1. Folienlager (1) mit mindestens einer Folie (3,4), die innerhalb einer Lagerhülse (2) angeordnet ist, wobei die Lagerhülse (2) zwei getrennte und wieder zusammengefügte Teilkörper (31,32) umfasst, wobei die Lagerhülse (2) zwei in axialer Richtung durchgehende Trennlinien (33,34;61,62) umfasst, **dadurch gekennzeichnet, dass** die zwei Teilkörper (31,32) an den Trennlinien stoffschlüssig miteinander verbunden sind.

2. Folienlager nach Anspruch 1, **dadurch gekennzeichnet, dass** die Lagerhülse (2) an den Enden der Trennlinien (33,34;61,62) jeweils eine Kerbe (35,36,37) aufweist.

3. Folienlager nach einem der vorhergehenden Ansprüche, **dadurch gekennzeichnet, dass** mindestens einer der Teilkörper (31,32) eine Geometrie (5) zur Fixierung der Folie (3,4) aufweist.

4. Folienlager nach einem der vorhergehenden Ansprüche, **dadurch gekennzeichnet, dass** eine Trennlinie (62) im Bereich der Geometrie (5) zur Fixierung der Folie (3,4) in der Lagerhülse (2) angeordnet ist.

5. Folienlager nach einem der vorhergehenden Ansprüche, **dadurch gekennzeichnet, dass** die beiden Teilkörper (31,32) etwa gleich groß sind.

6. Verfahren zum Herstellen einer Lagerhülse (2) für ein Folienlager (1), insbesondere für ein Folienlager (1) nach einem der vorhergehenden Ansprüche, **dadurch gekennzeichnet, dass** eine einteilige Lagerhülse (2) an Trennlinien (33,34;61,62) in zwei Teilkörper (31,32) getrennt wird, von denen mindestens einer bearbeitet wird, bevor die bearbeiteten Teilkörper (31,32) zusammengefügt werden.

7. Verfahren nach Anspruch 6, **dadurch gekennzeichnet, dass** eine Bruchkraft (41-45,51-55) in axialer Richtung auf die einteilige Lagerhülse (2) aufgebracht wird, um die Lagerhülse (2) in die mindestens zwei Teilkörper (31,32) zu trennen.

8. Verfahren nach Anspruch 6 oder 7, **dadurch gekennzeichnet, dass** mindestens einer der Teilkörper (31,32) spanend bearbeitet wird.

9. Verfahren nach einem der Ansprüche 6 bis 8, **dadurch gekennzeichnet, dass** die beiden bearbeiteten Teilkörper (31,32) an den Trennlinien (33,34;61,62) zusammengefügt und verschweißt werden.

## Claims

1. Film bearing (1) with at least one film (3, 4) which is arranged inside a bearing sleeve (2), the bearing sleeve (2) comprising two part bodies (31, 32) which are separate and are joined together again, the bearing sleeve (2) comprising two dividing lines (33, 34; 61, 62) which are continuous in the axial direction, **characterized in that** the two part bodies (31, 32) are connected to one another in an integrally joined manner at the dividing lines.

2. Film bearing according to Claim 1, **characterized in that** the bearing sleeve (2) has in each case one notch (35, 36, 37) at the ends of the dividing lines (33, 34; 61, 62).

3. Film bearing according to either of the preceding claims, **characterized in that** at least one of the part bodies (31, 32) has a geometry (5) for fixing the film (3, 4).

4. Film bearing according to one of the preceding claims, **characterized in that** one dividing line (62) is arranged in the region of the geometry (5) for fixing the film (3, 4) in the bearing sleeve (2).

5. Film bearing according to one of the preceding claims, **characterized in that** the two part bodies (31, 32) are of approximately identical size.

6. Method for producing a bearing sleeve (2) for a film bearing (1), in particular for a film bearing (1), according to one of the preceding claims, **characterized in that** a single-part bearing sleeve (2) is divided at dividing lines (33, 34; 61, 62) into two part bodies (31, 32), of which at least one is machined before the machined part bodies (31, 32) are joined together.

7. Method according to Claim 6, **characterized in that** a breaking force (41-45, 51-55) is applied to the single-part bearing sleeve (2) in the axial direction, in order to divide the bearing sleeve (2) into the at least two part bodies (31, 32).

8. Method according to Claim 6 or 7, **characterized in that** at least one of the part bodies (31, 32) is machined with the removal of material.

9. Method according to one of Claims 6 to 8, **characterized in that** the two machined part bodies (31, 32) are joined together and welded at the dividing lines (33, 34; 61, 62).

## Revendications

1. Palier à film (1) comprenant au moins un film (3, 4) qui est disposé à l'intérieur d'un manchon de palier (2), le manchon de palier (2) comprenant deux parties de corps (31, 32) séparées et réassemblées, le manchon de palier (2) comprenant deux lignes de séparation (33, 34 ; 61, 62) continues dans la direction axiale, **caractérisé en ce que** les deux parties de corps (31, 32) sont reliées l'une à l'autre par une liaison de matière au niveau de la ligne de séparation.

2. Palier à film selon la revendication 1, **caractérisé en ce que** le manchon de palier (2) comporte une encoche (35, 36, 37) à chacune des extrémités des lignes de séparation (33, 34 ; 61, 62).

3. Palier à film selon l'une des revendications précédentes, **caractérisé en ce qu'**au moins une des parties de corps (31, 32) présente une géométrie (5) permettant la fixation du film (3, 4).

4. Palier à film selon l'une des revendications précédentes, **caractérisé en ce qu'**une ligne de séparation (62) est disposée dans le manchon de palier (2) au niveau de la géométrie (5) permettant la fixation du film (3, 4).

5. Palier à film selon l'une des revendications précédentes, **caractérisé en ce que** les deux parties de corps (31, 32) sont sensiblement de même dimension.

6. Procédé de fabrication d'un manchon de palier (2) destiné à un palier à film (1), notamment un palier à film (1) selon l'une des revendications précédentes, **caractérisé en ce qu'**un manchon de palier (2) d'une seule pièce est séparé au niveau des lignes de séparation (33, 34 ; 61, 62) en deux parties de corps (31, 32) dont au moins une est traitée avant que les parties de corps traités (31, 32) ne soient assemblées.

7. Procédé selon la revendication 6, **caractérisé en ce qu'**une force de rupture (41-45, 51-55) est appliquée sur le manchon de palier (2) d'une seule pièce dans la direction axiale afin de séparer le manchon de palier (2) en les au moins deux parties de corps (31, 32).

8. Procédé selon la revendication 6 ou 7, **caractérisé en ce qu'**au moins une partie de corps (31, 32) est usinée.

9. Procédé selon l'une des revendications 6 à 8, **caractérisé en ce que** les deux parties de corps usinées (31, 32) sont assemblées et soudées au niveau des lignes de séparation (33, 34 ; 61, 62).
